# EUROPÄISCHE PATENTSCHRIFT

(11) **EP 2 791 391 B1**
(45) Veröffentlichungstag und Bekanntmachung des Hinweises auf die Patenterteilung: **26.06.2019**
(21) Anmeldenummer: 12786994.9
(22) Anmeldetag: 15.11.2012
(51) Int. Cl.: C23F 13/04, H01M 2/32, H01M 2/34, H01M 10/42

(54) **BATTERIE, KRAFTFAHRZEUG SOWIE VERFAHREN ZUM BETREIBEN DER BATTERIE**
BATTERY, MOTOR VEHICLE AND METHOD FOR OPERATING THE BATTERY
BATTERIE, VÉHICULE À MOTEUR ET PROCÉDÉ PERMETTANT DE FAIRE FONCTIONNER UNE BATTERIE

(30) Priorität: 13.12.2011 DE 102011088349
(43) Veröffentlichungstag der Anmeldung: 22.10.2014
(73) Patentinhaber: Robert Bosch GmbH, 70442 Stuttgart (DE); Samsung SDI Co., Ltd., Yongin-si Gyeonggi-do 446-577 (KR)
(72) Erfinder: KOHLBERGER, Markus, 70174 Stuttgart (DE); FETZER, Joachim, 73342 Bad-Ditzenbach (DE); FINK, Holger, 70567 Stuttgart (DE)
(74) Vertreter: Bee, Joachim
(86) Internationale Anmeldenummer: PCT/EP2012/072684
(87) Internationale Veröffentlichungsnummer: WO 2013/087340

(56) Entgegenhaltungen:
- EP-A1- 2 320 497
- DE-A1-102008 010 971
- JP-A- 8 185 896
- JP-A- 2008 186 591

## Beschreibung

Die vorliegende Erfindung betrifft eine Batterie mit einer Batteriezelle sowie ein Kraftfahrzeug mit der erfindungsgemäßen Batterie. Ferner wird ein Verfahren zur Trennung einer elektrisch leitfähigen Verbindung zwischen einer Elektrode und einem Batteriezellengehäuse einer Batteriezelle zur Verfügung gestellt.

### Stand der Technik

In Fahrzeugen mit zumindest teilweisem elektrischen Antrieb kommen elektrische Energiespeicher zum Einsatz, um die elektrische Energie für den Elektromotor, welcher den Antrieb unterstützt bzw. als Antrieb dient, zu speichern. In den Fahrzeugen der neuesten Generation finden hierbei sogenannte Lithium-Ionen-Batterien Verwendung. Diese zeichnen sich unter anderem durch hohe Energiedichten und eine äußerst geringe Selbstentladung aus. Lithium-Ionen-Zellen besitzen mindestens eine positive und eine negative Elektrode (Kathode bzw. Anode), die Lithium-Ionen (Li+) reversibel ein-(Interkalation) oder wieder auslagern (Deinterkalation) können.

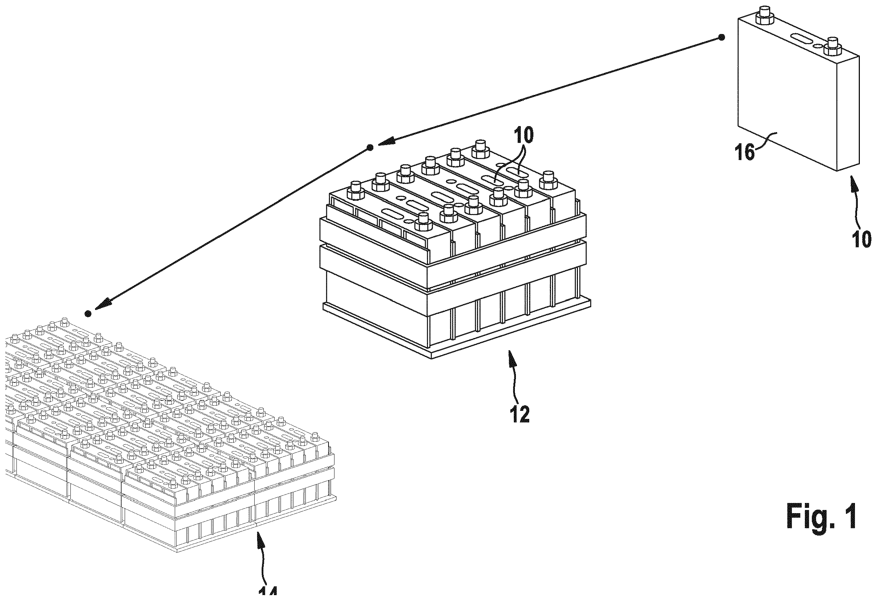

Figur 1 zeigt, wie einzelne Batteriezellen 10, beispielsweise mit einem metallischen Batteriezellengehäuse 16, zu Batteriemodulen 12 und dann zu Batterien 14 zusammengefasst werden können. Dies erfolgt durch eine nicht dargestellte Parallel- oder Reihenschaltung der Pole 18 der Batteriezellen 10. Dabei besteht per Definition ein Batteriemodul 12 bzw. eine Batterie 14 aus mindestens zwei Batteriezellen 10, wobei die Begriffe Batterie 14 und Batteriemodul 12 oft synonym verwendet werden. Die elektrische Spannung einer Batterie 14 beträgt beispielsweise zwischen 120 und 600 Volt Gleichstrom.

Bei sogenannten Hardcasezellen, deren Batteriezellengehäuse aus einem festen Aluminium- oder Stahlblech besteht, ist üblicherweise eine der beiden Elektroden direkt mit dem Batteriezellengehäuse verbunden, um zusätzliche Potentialunterschiede, die langfristig zur Korrosion des Batteriezellengehäuses führen können, zu vermeiden. Die andere Elektrode ist durch eine Dichtung elektrisch vom Batteriezellengehäuse getrennt.

Bei einem Störfall, z. B. durch mechanische Einwirkung bei einem Unfall eines batteriebetriebenen Fahrzeuges, kann die Isolation zwischen den Batteriezellen beschädigt werden. Die Tatsache, dass eine der Elektroden mit dem Batteriezellengehäuse verbunden ist, stellt nun ein Sicherheitsrisiko dar.

Die DE 197 14 847 A1 offenbart eine Schaltung und ein Verfahren, um eine negative Elektrode einer Batteriezelle mit dem Batteriezellengehäuse zu verbinden. Zwischen der negativen Elektrode und dem Zellengehäuse ist ein Widerstand vorgesehen, welcher mittels eines Signalgebers überwacht wird. Bei ungewolltem Kontakt der positiven Elektrode mit dem Zellengehäuse wird durch den Widerstand der Stromfluss begrenzt und vom Signalgeber ein Signal generiert.

Die JP 8 185896 A zeigt eine Vorrichtung zur Erkennung von Unregelmäßigkeiten in einer Batterie.

Die JP 2008 186591 A zeigt eine Sekundärbatterie mit Lithium und ein Batteriepack.

Die DE 10 2008 010971 A1 zeigt ein Schutzsystem für Batteriemodule.

Die EP 2 320 497 A1 zeigt ein System zur Erkennung von Unregelmäßigkeiten in einer Sekundärbatterie.

### Offenbarung der Erfindung

Erfindungsgemäß wird eine Batterie mit einer Batteriezelle zur Verfügung gestellt. Kennzeichnend ist eine Elektrode der Batteriezelle mit dem Batteriezellengehäuse, welches zum Beispiel aus Aluminium oder Stahl besteht, über ein Schaltmittel elektrisch leitfähig verbunden. Neben dieser elektrisch leitfähigen Verbindung sind die Elektroden lediglich über den Elektrolyten mit dem Batteriezellengehäuse verbunden, ansonsten insbesondere im Bereich der Durchführung der Elektroden durch das Batteriezellengehäuse von diesem elektrisch isoliert. Die Batterie umfasst ferner eine Überwachungsschaltung, welche dazu ausgebildet ist, bei Erkennen eines Störungssignals das im störungsfreien Betrieb geschlossene Schaltmittel zu öffnen. Als Störungssignal eignet sich grundsätzlich jedes Signal, welches eine Trennung der Elektrode vom Batteriezellengehäuse sinnvoll erscheinen lässt - beispielsweise Signale, die auf einen Unfall oder sonstigen Schadensfall hindeuten.

Die erfindungsgemäße Batterie hat den Vorteil, während des störungsfreien Betriebes einen Korrosionsschutz der Batteriezellengehäuse zu gewährleisten. Bei einem Störfall, beispielsweise bei einem Unfall eines mit der erfindungsgemäßen Batterie betriebenen Fahrzeuges, wird die elektrisch leitfähige Verbindung zwischen der Elektrode und dem Batteriezellengehäuse getrennt, wodurch das Batteriezellengehäuse nur mehr über den Elektrolyten mit den Elektroden verbunden ist. Durch diese Trennung der Verbindung zwischen Batteriezellengehäuse und Elektrode wird bei einem Störfall das Risiko eines Kurzschlusses verringert.

Gemäß einer bevorzugten Ausgestaltung der Erfindung ist die Überwachungsschaltung auf einer Batteriezellenüberwachungsplatine (Cell Supervising Circuit Platine) integriert. Eine Batteriezellenüberwachungsplatine ist für die Überwachung mehrerer Batteriezellen innerhalb einer Batterie zuständig und auch bei Batteriezellen gemäß dem Stand der Technik innerhalb der Batterie verbaut. Diese überwacht normalerweise die Spannungen von mehreren Batteriezellen, und verfügt zudem über Temperaturfühler. Durch Integration der elektronischen Überwachungsschaltung auf der Batteriezellenüberwachungsplatine können somit bestehende Ressourcen erweitert werden, anstatt eine zusätzliche Platine zu verbauen. Ebenso ist es denkbar, dass die Batteriezellenüberwachungsplatine bereits alle erforderlichen Funktionen und Mittel der Überwachungsschaltung beinhaltet, wodurch die bestehende Batteriezellenüberwachungsplatine übernommen werden kann. Ferner ist es mit Vorteil möglich, auch das Schaltmittel auf der Batteriezellenüberwachungsplatine anzuordnen, um eine noch kompaktere Anordnung zu erzielen.

Das Schaltmittel kann vorteilhaft ein Relais oder Halbleiterbaustein, beispielsweise ein Transistor sein, wodurch sich nach den jeweiligen Rahmenbedingungen weitere Vorteile einstellen können.

Erfindungsgemäß sind bei einer Parallelschaltung mehrerer Batteriezellen die Elektroden und die Batteriezellengehäuse der parallel geschalteten Batteriezellen bevorzugt über ein gemeinsames Schaltmittel elektrisch leitfähig verbunden. Dadurch wird für die parallel geschalteten Batteriezellen lediglich ein einziges Schaltmittel benötigt.

Das Störungssignal stammt bevorzugt von einem Aufprallsensor. Dieser detektiert einen Aufprall eines batteriegetriebenen Fahrzeuges bereits in einer sehr frühen Deformationsphase. Solche Sensoren werden bisher zur Auslösung von Rückhaltesystemen, wie beispielsweise Airbag oder Gurtstraffer verwendet. Durch die Generierung des Störungssignals in einer sehr frühen Unfallphase steht für die Trennung der Elektrode vom Batteriezellengehäuse noch ausreichend Zeit zur Verfügung. Somit wird sichergestellt, dass die Schaltmittel noch geöffnet werden können, beispielsweise bevor die Überwachungsschaltung durch den Unfall zerstört wird.

Vorzugsweise ist die Batterie eine Lithium-Ionen-Batterie. Durch die Verwendung der Lithium-Ionen-Technologie können besonders hohe Energiespeicherdichten erzielt werden, was besonders im Bereich der Elektromobilität zu weiteren Vorteilen führt.

Ferner wird ein Kraftfahrzeug zur Verfügung gestellt, welches die erfindungsgemäße Batterie umfasst. Die Batterie ist in der Regel zur Speisung eines elektrischen Antriebssystems des Fahrzeuges vorgesehen.

Des Weiteren wird ein Verfahren zur Trennung einer elektrisch leitfähigen Verbindung zwischen einer Elektrode und einem Batteriezellengehäuse einer Batteriezelle zur Verfügung gestellt. Dieses umfasst einen ersten Schritt des Bereitstellens einer erfindungsgemäßen Batterie und als zweiten Schritt das Detektieren eines Störungssignals durch die Überwachungsschaltung. Im dritten Schritt folgt das Öffnen des Schaltmittels zwischen der Elektrode und dem Batteriezellengehäuse.

Vorteilhafte Weiterbildungen der Erfindung sind in den Unteransprüchen angegeben und können der Beschreibung entnommen werden.

### Zeichnungen

Ausführungsbeispiele der Erfindung werden anhand der Zeichnungen und der nachfolgenden Beschreibung näher erläutert. Es zeigen:
Figur 1 eine Batteriezelle, ein Modul und eine Batterie, und
Figur 2 eine erfindungsgemäße Batteriezelle mit einem Schaltmittel.

Auf Figur 1 wurde bereits zur Erläuterung des Standes der Technik eingegangen.

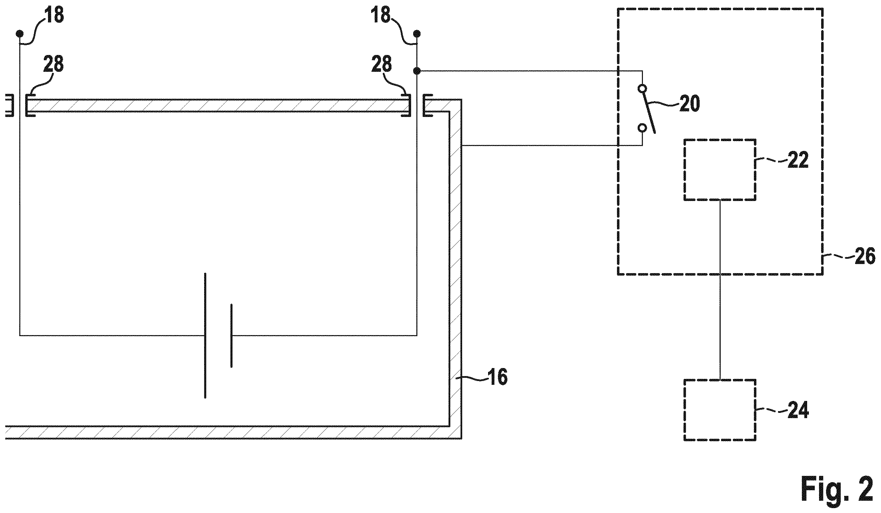

Figur 2 zeigt einen Teilbereich der erfindungsgemäßen Batterie 14, welcher eine Batteriezelle 10 umfasst. Normalerweise ist die negative der beiden galvanischen Elektroden 18 mit dem Batteriezellengehäuse 16 über das Schaltmittel 20 elektrisch leitfähig verbunden. Neben dieser Verbindung über das Schaltmittel 20 sind die Elektroden 18 mit dem Batteriezellengehäuse 16 lediglich über den Elektrolyten verbunden. Im Bereich der Durchführung der Elektroden 18 durch das Batteriezellengehäuse 16 sind die Elektroden 18 vom Batteriezellengehäuse 16 mittels eines elektrischen Isolators 28 getrennt. Von der Überwachungsschaltung 22, der Batteriezellenüberwachungsplatine 26 (Cell Supervising Circuit Platine) sowie dem Aufprallsensor 24 sind in Figur 2 schematisch die Umrisse (breite Strichstärke) dargestellt. Das Schaltmittel 20 kann wie dargestellt zusammen mit der Überwachungsschaltung 22 auf der Batteriezellenüberwachungsplatine 26 angeordnet, oder ein Teil dieser sein, wobei die Überwachungsschaltung 22 beispielsweise mit einem Aufprallsensor 24 verbunden ist. Im Regelfall sind mehrere der Batteriezellen 10 in einer einzigen Batterie 14, insbesondere im Gehäuse der Batterie 14 untergebracht. In solch einem Fall steuert eine Überwachungsschaltung 22 mehrere Schaltmittel 20. Diese Überwachungsschaltung 22 und die Schaltmittel 20 können wiederum gemeinsam auf einer Batteriezellenüberwachungsplatine 26 angeordnet sein, welche sich ebenfalls im Batteriegehäuse befindet. Als Aufprallsensor 24 kann beispielsweise ein standardmäßig vorhandener Aufprallsensor 24 verwendet werden, welcher im Regelfall außerhalb der Batterie 14 an der Fahrzeugkarosserie befestigt ist.

Während des störungsfreien Betriebes ist das Schaltmittel 20 geschlossen, so dass die negative Elektrode 18 elektrisch leitfähig mit dem Batteriezellengehäuse 16 verbunden ist. Detektiert nun die Überwachungsschaltung 22 ein Störungssignal, welches vom Aufprallsensor 24 stammt, so öffnet die Überwachungsschaltung 22 das Schaltmittel 20. Dadurch wird die elektrisch leitfähige Verbindung zwischen der negativen Elektrode 18 und dem Batteriezellengehäuse 16 unterbrochen. 2.

## Patentansprüche

1. Batterie (14) mit einem einzigen gemeinsamen Schaltmittel (20) und mit einer Parallelschaltung mehrerer Batteriezellen (10), wobei jeweils eine Elektrode (18) der jeweiligen Batteriezelle (10) und die Batteriezellengehäuse (16) über das gemeinsame Schaltmittel (20) elektrisch leitfähig verbunden sind, und wobei die Batterie (14) ferner eine Überwachungsschaltung (22) umfasst, welche dazu ausgebildet ist, bei Erkennen eines Störungssignals das im störungsfreien Betrieb geschlossene gemeinsame Schaltmittel (20) zu öffnen.

2. Batterie (14) nach Anspruch 1, wobei die Überwachungsschaltung (22) auf der Batteriezellenüberwachungsplatine (26) integriert ist.

3. Batterie (14) nach einem der vorhergehenden Ansprüche, wobei das Schaltmittel (20) auf der Batteriezellenüberwachungsplatine (26) angeordnet ist.

4. Batterie (14) nach einem der vorhergehenden Ansprüche, wobei das Schaltmittel (20) ein Relais ist.

5. Batterie (14) nach einem der vorhergehenden Ansprüche, wobei das Schaltmittel (20) ein Halbleiterbaustein ist.

6. Batterie (14) nach einem der vorhergehenden Ansprüche, wobei das Störungssignal von einem Aufprallsensor (24) stammt.

7. Kraftfahrzeug umfassend eine Batterie (14) nach einem der Ansprüche 1 bis 6.

8. Verfahren zur Trennung einer elektrisch leitfähigen Verbindung zwischen einer Elektrode (18) und einem Batteriezellengehäuse (16) einer Batteriezelle (10), umfassend die folgenden Schritte:
(i) Bereitstellen einer Batterie nach einem der Ansprüche 1 bis 6
(ii) Detektieren eines Störungssignals durch die Überwachungsschaltung (22)
(iii) Öffnen des Schaltmittels (20) zwischen der Elektrode (18) und dem Batteriezellengehäuse (16).

## Claims

1. Battery (14) having a single common switching means (20) and having a parallel connection of multiple battery cells (10), wherein in each case one electrode (18) of the respective battery cell (10) and the battery cell housing (16) are connected in an electrically conductive manner by way of the common switching means (20), and wherein the battery (14) in addition comprises a monitoring circuit (22) that is embodied for the purpose of opening the common switching means (20) in the case of detecting a malfunction signal, said common switching means remaining closed during normal operation.

2. Battery (14) according to Claim 1, wherein the monitoring circuit (22) is integrated into the battery cell monitoring circuit board (26).

3. Battery (14) according to either one of the preceding claims, wherein the switching means (20) is arranged on the battery cell monitoring circuit board (26).

4. Battery (14) according to any one of the preceding claims, wherein the switching means (20) is a relay.

5. Battery (14) according to any one of the preceding claims, wherein the switching means (20) is a semiconductor component.

6. Battery (14) according to any one of the preceding claims, wherein the malfunction signal originates from a shock sensor (24).

7. Motor vehicle comprising a battery (14) according to any one of Claims 1 to 6.

8. Method for disconnecting an electrically conductive connection between an electrode (18) and a battery cell housing (16) of a battery cell (10) comprising the following steps:
(i) providing a battery according to any one of Claims 1 to 6
(ii) detecting a malfunction signal by means of the monitoring circuit (22)
(iii) opening the switching means (20) between the electrode (18) and the battery cell housing (16).

## Revendications

1. Batterie (14), comprenant un moyen de commutation commun (20) unique et comprenant un circuit parallèle composé de plusieurs cellules de batterie (10), une électrode (18) de la cellule de batterie (10) correspondante et le boîtier de cellule de batterie (16) étant respectivement reliés de manière électriquement conductrice par le biais du moyen de commutation commun (20) et la batterie (14) comportant en outre un circuit de surveillance (22) qui est configuré pour, en cas de reconnaissance d'un signal de défaut, ouvrir le moyen de commutation commun (20) qui est fermé lors du fonctionnement sans défaut.

2. Batterie (14) selon la revendication 1, le circuit de surveillance (22) étant intégré sur la platine de surveillance de cellules de batterie (26).

3. Batterie (14) selon l'une des revendications précédentes, le moyen de commutation (20) étant disposé sur la platine de surveillance de cellules de batterie (26).

4. Batterie (14) selon l'une des revendications précédentes, le moyen de commutation (20) étant un relais.

5. Batterie (14) selon l'une des revendications précédentes, le moyen de commutation (20) étant un composant semiconducteur.

6. Batterie (14) selon l'une des revendications précédentes, le signal de défaut étant issu d'un détecteur de collision (24).

7. Véhicule automobile comprenant une batterie (14) selon l'une des revendications 1 à 6.

8. Procédé de déconnexion d'une liaison électriquement conductrice entre une électrode (18) et un boîtier de cellule de batterie (16) d'une cellule de batterie (10), comprenant les étapes suivantes :
(i) fourniture d'une batterie selon l'une des revendications 1 à 6,
(ii) détection d'un signal de défaut par le circuit de surveillance (22),
(iii) ouverture du moyen de commutation (20) entre l'électrode (18) et le boîtier de cellule de batterie (16).
